(19) Europäisches Patentamt
European Patent Office
Office européen des brevets

(11) Publication number: **0 158 733**
**A1**

# (12) EUROPEAN PATENT APPLICATION

(21) Application number: 84115916.3

(22) Date of filing: 20.12.84

(51) Int. Cl.$^4$: C 08 L 75/08
C 08 L 69/00

(30) Priority: 29.12.83 US 566704

(43) Date of publication of application:
23.10.85 Bulletin 85/43

(84) Designated Contracting States:
DE FR GB IT NL

(71) Applicant: GENERAL ELECTRIC COMPANY
1 River Road
Schenectady New York 12305(US)

(72) Inventor: Allan, Deborah Lynne
525 Windsor Road
Dalton Massachusetts 01226(US)

(74) Representative: Schüler, Horst, Dr. et al,
Kaiserstrasse 41
D-6000 Frankfurt/Main 1(DE)

## (54) Polyestercarbonate/polyetherimide blends.

(57) The invention concerns blends of polyestercarbonates and polyetherimides. More particularly, the invention is concerned with such blends having enhanced physical and/- or chemical properties. The polyetherimide-polyestercarbonate blends are suitable for the manufacture of fibers, films, sheets, laminates and articles of manufacture including reinforced articles made by conventional manufacturing techniques.

EP 0 158 733 A1

0158733

10421-8CU-03886

# POLYESTERCARBONATE/POLYETHERIMIDE BLENDS

## BACKGROUND OF THE INVENTION

The present invention concerns novel polymer blends. More particularly, the invention concerns novel polyetherimide blends.

Polyetherimides are unique thermoplastic polymers which exhibit superior physical and chemical properties, including high heat resistance, exceptional strength and excellent processability. These polymers can be used as wire coatings and are particularly suited for injection molding applications. Polyetherimides are conventionally made by reacting an aromatic bis(ether anhydride) with an organic diamine. Present manufacturing practices include solution polymerization or melt polymerization techniques or combinations of the two, as hereinafter described.

It has been found that certain properties of polyetherimide polymers can be modified by blending them with other polymers which are compatible or which can form homogeneous blends. For example, Mellinger et al., U.S. Patent Application serial no. 365,584, filed April 5, 1982, describe polyetherimide-polycarbonate blends which have advantageous thermal and physical properties.

It is desirable to have a polymer system in which various physical properties, such as flexibility, can be controlled in a simple and convenient manner. The plastics fabricator can thereby tailor the properties of the plastic to the particular item being made.

## SUMMARY OF THE INVENTION

In accordance with this invention, a polyetherimide blend comprises from about 1 to about 99 parts by weight of a polyetherimide and from about 99 to about 1 parts by weight of a polyestercarbonate.

It has been found that the flexibility of these blends can be controlled over a wide range by altering

the relative proportions of the polyetherimide and the polyestercarbonate.

DESCRIPTION OF THE PREFERRED EMBODIMENTS

In the present invention, homogeneous blends of polyestercarbonate and polyetherimide are produced. Such blends can be injection molded or compression molded into intricate shapes, and can be cast into films, which exhibit desirable physical properties. The individual polyestercarbonates and polyetherimides are prepared separately prior to the production of the blend.

In general, the polyester carbonates contain structural units derived from dihydric phenols and/or aliphatic dihydroxy compounds or glycols, and difunctional acids, the desired units occuring in various manners in the copolymer chain. The polymers, for example, may be of a random type, i.e., the structural units derived from the dihydric phenol, glycol and difunctional acids are propagated along the copolymer chain in a random fashion. Typical of such random copolymers are those resulting from the use of monomeric glycols, monomeric dihydric phenols, and monomeric difunctional acids. Others may be of a random-block type, i.e., the units making up the copolymer are randomly arranged, but at least one of the unit structures is polymeric in nature. Typical of random-block copolymers are those in which either the glycol, dihydric phenol, or difunctional acid derived structural unit is polymeric. Still other copolymers are of the block-block type in which the structural units derived from the various components are polymeric in and of themselves.

In general, any aliphatic dihydroxy compound or glycol can be used. Included are the lower molecular weight, aliphatic dihydroxy compounds, such as ethylene glycol, propanediols, butanediols, pentanediols, hexanediols, including pinacol, heptanediols, octanediols,

neopentyl glycol, aryl-alkyl glycols, such as 4,4'-dihydroxyethyldiphenyl, styrene glycol, xylylene glycols, dihydroxy alkyl ethers of dihydric phenols such as the dihydroxy ethyl ether of Bisphenol-A, thiodiglycols and cycloaliphtic glycols such as 1,4-dihydroxycyclohexane, 2,2-bis(4-hydroxycyclohexyl)-propane, bis(4-hydroxycyclohexyl)-methane, among others. Among the useful higher molecular weight aliphatic dihydroxy compounds are the polyethylene glycols, polystyrene glycols, polypropylene glycols, polybutylene glycols, polythioglycols, polyarylalkyl ether glycols and copolymer glycols, the latter typified by polyethylene glycol, polypropylene glycol copolymers sold by Wyandotte Chemical Company and known as Pluronics, etc. Included also are dihydroxy compounds such as may be derived from dibasic acids and glycols, for example, the diethyleneglycol ester of adipic acid, or the diethyleneglycol ester of sebacic acid, the dineopentyl glycol ester of adipic acid or terephthalic acid, etc. Further glycols useful in connection with the invention are silanediols such as diphenylsilanediol, dimethylsilanediol, dimethylsilanediol dimer, methylphenylsilanediol, ethylphenylsilanediol, etc. Tertiary amino-glycols are also useful, including among others N-phenyldiethanolamine, N-methyldiethanolamine, N-propyldiethanolamine and N-phenyldi-n-propanolamine. Any polymeric aliphatic material having hydroxyl end groups is useful, including polyethers, polyesters, polyurethanes, polyacetals and polysiloxanes.

Furthermore, polymers terminated with -COCl groups, for example, polyesters prepared from dibasic acid chlorides, are useful, as are polymers having -OCOCl end groups, such as polycarbonates prepared from phosgene.

The aliphatic dihydroxy compounds or glycols can typically be represented by the formula:

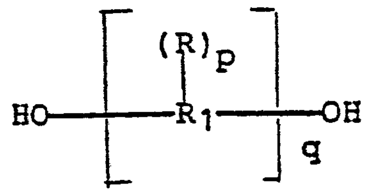

where R is a monovalent hydrocarbon radical, for example, alkyl radicals (e.g., methyl, ethyl, propyl, isopropyl, butyl, decyl, etc.), aryl radicals (e.g., phenyl, naphthyl, biphenyl, tolyl, xylyl, etc.), aralkyl radicals (e.g., benzyl, ethylphenyl, etc.), cycloaliphatic radicals (e.g., cyclopentyl, cyclohexyl, etc.) as well as monovalent hydrocarbon radicals containing inert substituents thereon, such as halogen (chlorine, bromine, fluorine, etc.). It will be understood that where more than one R is used, they may be alike or different. $R_1$ can be selected from the group consisting of alkylene and alkylidene residues such as methylene, ethylene, propylene, propylidene, isopropylidene, butylene, butylidene, isobutylidene, amylene, isoamylene, amylidene, isoamylidene, etc. $R_1$ can also be a silane radical or can be polyalkyoxy such as polyethoxy, polypropoxy, polythioethoxy, polybutoxy, polyphenylethoxy, polydiphenylsiloxy, polymethylphenylsiloxy, etc. $R_1$ can also consist of two or more alkylene or alkylidene groups as above separated by the residue of an aromatic nucleus, a teriary amino radical, an ether radical, a carbonyl radical, a silane radical, or by a sulfur containing radical such as sulfide, sulfoxide, sulfone, etc. $R_1$ may also be a glycol dibasic acid ester residue derived from, for example, dibasic acids such as adipic, azelaic, sebacic, isophthalic, terephthalic and glycols such as have been disclosed above. Other groupings which can be represented by $R_1$ will occur to those skilled in the art. The ester residue can be polymeric or monomeric. The subscript p is a whole number including zero to a maximum

determined by the number of replaceable hydrogens on $R_1$. The subscript q is an integer which may be varied as desired and $R_1$, where q is more than 1, may be like or different radicals. It is understood, of course, that mixtures of different glycols may be used and where glycol is mentioned, such mixtures are considered to be included.

Any dihydric phenol compound is useful in the practice of the invention. The dihydric phenol compounds used in connection with the invention can typically be represented by the general formula:

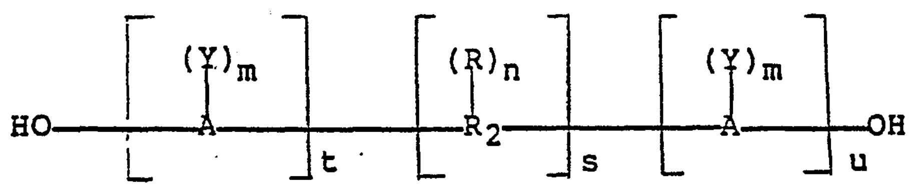

where R is a monovalent hydrocarbon radical as defined above, $R_2$ is selected from the group consisting of an alkylene and alkylidene residue in the same sense as $R_1$ or an ether, a sulfur-containing linkage such as sulfide, sulfoxide, sulfone, a carbonyl, a tertiary nitrogen or a silicon-containing linkage such as silane or siloxy. $R_2$ can also consist of two or more alkylene or alkylidene groups, such as above, separated by the residue of an aromatic nucleus, a tertiary amino radical, an ether radical or by a carbonyl radical, a silene radical or by a sulfur-containing radical such as sulfide, sulfoxide, sulfone, etc. Other groupings which can be represented by $R_2$ will occur to those skilled in the art. A is the residue of an aromatic nucleus, Y is a substituent selected from the group consisting of (a) inorganic atoms, (b) inorganic radicals, and (c) organic radicals, (a), (b) and (c) being inert to and unaffected by the reactants and by the reaction conditions, m is a whole number including zero to a maximum equivalent to the

number of replaceable nuclear hydrogens substituted on the aromatic hydrocarbon residue, n is a whole number including zero to a maximum determined by the number of replaceable hydrogens on $R_2$, s ranges from zero to 1, t and u are whole numbers including zero. When s is zero, however, either t or u may be zero and not both.

In the dihydric phenol compound, the substituents Y may be the same or different. When n is greater than one, the R's may be alike or different. Monovalent hydrocarbon radicals designated by R can be the same as those in reference to the aliphatic dihydroxy compounds described above, as may be those represented by $R_1$. Among the substituents represented by Y are halogen (e.g., chlorine, bromine, fluorine, etc.) or oxy radicals of the formula O-W, where W is a monovalent hydrocarbon radical similar to R. Other inert substituents such as a nitro group can be represented by Y. Where s is zero the aromatic nuclei are directly joined with no intervening alkylene or alkylidene or other bridge. The positions of the hydroxyl groups and Y on the aromatic nuclear residues A can be varied in the ortho, meta, or para positions and the groupings can be in a vicinal, asymmetrical or symmetrical relationship, where two or more of the nuclearly bonded hydrogens of the aromatic hydrocarbon residue are substituted with Y and the hydroxyl group. Examples of dihydric phenol compounds that may be employed in this invention include, 2,2-bis-(4-hydroxyphenyl)propane (Bisphenol-A); 2,4'-dihydroxydiphenylmethane; bis-(2-hydroxyphenyl)-methane; bis-(4-hydroxyphenyl)-methane; bis-(4-hydroxy-5-nitrophenyl)-methane; bis-(4-hydroxy-2,6-dimethyl-3-methoxyphenyl)-methane; 1,1-bis-(4-hydroxyphenyl)-ethane; 1,2-bis-(4-hydroxyphenyl)-ethane; 1,1-bis-(4-hydroxy-2-chlorophenyl)-ethane; 1,1-bis-(2,5-dimethyl-4-hydroxyphenyl)-ethane; 1,3-bis-(3-methyl-4-hydroxyphenyl)-propane; 2,2-bis-(3-phenyl-4-hydroxyphenyl)-propane; 2,2-bis-(3-isopropyl-4-hydroxyphenyl)-propane; 2,2-bis-(4-hydroxyphenyl)pentane; 3,3-bis-(4-hydroxyphenyl)-pentane; 2,2-bis(4-hydroxyphenyl)-heptane; bis-(4-hydroxyphenyl)-phenyl methane; bis-(4-hydroxyphenyl)-cyclohexyl methane; 1,2-bis-(4-hydroxyphenyl)-1,2-bis-(phenyl)-ethane; 2,2-bis-(4-hydroxy-phenyl)-1,3-bis-phenyl)-propane, 2,2-bis-(4-hydroxyphenyl)-1-phenyl propane; and the like. Also included are dihydroxybenzenes typified by hydroquinone and resorcinol, dihydroxydiphenyls such as 4,4'-dihydroxydiphenyl; 2,2'-dihydroxydiphenyl; 2,4'-dihydroxydiphenyl, dihydroxynaphthalenes such as 2,6-dihydroxynaphthalene, etc. Dihydroxy aryl sulfones such as those set forth in application Ser. No. 613,817, filed Oct. 4, 1956, assigned to the same assignee as this invention are also useful, e.g., bis-(p-hydroxyphenyl)-sulfone; 2,4'-dihydroxydihphenyl sulfone, 5'-chloro-2,4'-dihydroxydiphenyl sulfone, 5'-chloro-2',4-dihydroxydiphenyl sulfone; 3'-chloro-4,4'-dihydroxydiphenyl sulfone; bis-(4-hydroxyphenyl diphenyl disulfone etc. The preparation of these and other useful sulfones is described in U.S. Pat. No. 2,288,282-Huissman. Polysulfones as well as substituted sulfones using halogen, nitrogen, alkyl radicals, etc. are also useful. Dihydroxy aromatic ethers such as those set forth in application Ser. No. 598,768, filed July 19, 1955, now U.S. Pat. No. 3,148,172 assigned to the same assignee as this invention are also useful. Methods of preparing such materials are found in Chemical Reviews, 38, 414-417 (1946), and U.S. Pat. No. 2,739,171-Linn. Exemplary of such dihydroxy aromatic ethers are p,p'-dihydroxydiphenyl ether; p,p'-dihydroxytriphenyl ether; the 4,3'-, 4,2'-, 4,1'-, 2,2'-, 2,3'-, etc. dihydroxydiphenyl ethers; 4,4'-dihydroxy-2,6-dimethyldiphenyl ether; 4,4'dihydroxy-2,5-dimethyldiphenyl ether, 4,4'dihydroxy-3,3'-di-isobutyldiphenyl ether; 4,4'-dihydroxy-3,3'-diisopropyldiphenyl ether 4,4'-dihydroxy, 3,2'-dinitrodiphenyl ether; 4,4'-dihydroxy-3,3'-dichlorodiphenyl ether; 4,4'-dihydroxy-3,3'-difluorodiphenyl ether; 4,4'-dihydroxy-2,3'-dibromodiphenyl ether; 4,4'-dihydroxydinaphthyl ether; 4,4'-dihydroxy-3,3'-dichlorodinaphthyl ether; 2,4-dihydroxytetraphenyl ether; 4,4'-dihydroxypentaphenyl ether; 4,4'-dihydroxy-2,6-dimethoxydiphenyl ether; 4,4'-dihydroxy-2,4-diethoxydiphenyl ether, etc. Mixtures of the dihydric phenols can also be employed and where dihydric phenol is mentioned herein, herein, mixtures of such materials are considered to be included.

In general, any difunctional carboxylic acid conventionally used in the preparation of linear polyesters may be used for the preparation of the polyesters of the present invention. The carboxylic acids which are useful are aliphatic carboxylic acids, aliphatic-aromatic carboxylic acids or aromatic carboxylic acids. Of course, the corresponding acid halides are also useful.

The acids which are useful will generally conform to the formula:

$$R"—[-R'-]_q—COOH$$

in which R' is an alkylene, alkylidene or cycloaliphatic group in the same manner as set out above for $R_1$ in the formula for the aliphatic dihydroxy compounds described above; an alkylene, alkylidene or cycloaliphatic group containing ethylenic unsaturation; an aromatic radical such as phenylene, naphthylene, biphenylene, substituted phenylene, etc.; two or more aromatic groups connected through non-aromatic linkages such as those defined by $R_2$ in the dihydric phenol compounds described above; an aralkyl radical such as tolylene, xylylene, etc. R" is either a carboxyl or a hydroxyl group, and q is one where

R" is a hydroxyl group, and either zero or one where R" is a carboxyl group.

Included within the scope of this invention are the saturated, aliphatic dibasic acids derived from straight chain paraffin hydrocarbons, such as oxalic, malonic, dimethyl malonic, succinic, glutaric, adipic, pimelic, suberic, azelaic and sebacic acid. Also included are the halogen-substituted aliphatic dibasic acids. Aliphatic carboxylic acids containing hetero atoms in their aliphatic chain, such as thio-diglycollic or diglycollic acid may also be used. Also useful are such unsaturated acids as maleic or fumaric.

Suitable examples of aromatic and aliphatic aromatic dicarboxylic acids which may be used are phthalic, isophthalic, terephthalic, homophthalic, o-, m-, and p-phenylenediacetic acid; the polynuclear aromatic acids such as diphenic acid, and 1,4 naphthalic acid.

Examples of hydroxy acids are the aliphatic hydroxy acids such as hydroxybutyric acid, glycollic acid, and lactic acid. Examples of aromatic and aliphatic-aromatic hydroxy acids are mandelic acid, p-, m- and o-hydroxy benzoic acid. The hydroxy-substituted long-chain fatty acids, such as 12-hydroxystearic acid, may also be used. Cycloaliphatic acids including tetrahydroisophthalic, 3,6-endomethylenetrahydrophthalic acid (also known as Carbic or Nadic acid), hexachloro-3,6-endomethylenetetrahydrophthalic acid (also known as Chlorendic acid) or camphoric acid may also be used.

Other useful acids are the polymerized fatty acids as, for example, those sold under the trade name "Empol" by the Emery Company, one example of which is Empol 3079-S, which is a linoleic acid dimer containing two carboxyl groups per molecule. Mixtures of the carboxylic acids can also be employed and where carboxylic acid is mentioned herein, mixtures of such materials are considered

to be included. It is to be understood that a reference to dicarboxylic acids shall include not only the acid but the acid chloride. Thus terms such as terephthalic acid and isothalic acid encompass terephthaloyl chloride and isothaloyl chloride. Other chlorides of the above described acids will occur readily to those skilled in the art.

The particular chain stopper used is not critical and any suitable monofunctional carboxylic acids or monofunctional hydroxy compounds may be employed.

Generally speaking, the polyester carbonates of the invention are prepared by reacting a dihydric phenol compound, a carbonate precursor such as phosgene, a carbonate ester, etc., an aliphatic dihydroxy material or glycol, and a difunctional acid. A number of polyester carbonates are available commercially. One such is Lexan® PPC.

The blends of the invention also include a polyetherimide of the formula:

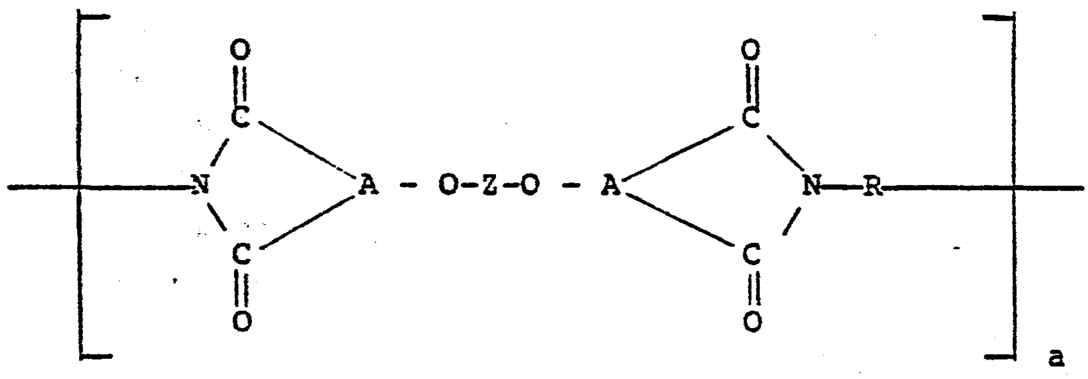

where "a" represents a whole number in excess of 1, e.g., 10 to 10,000 or more, the group -O-A< is selected from:

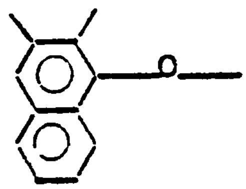
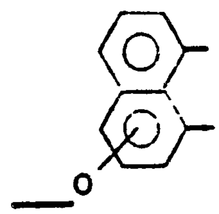
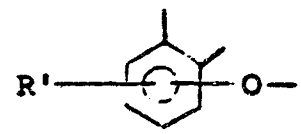

R' being hydrogen, lower alkyl or lower alkoxy. Preferably the polyetherimide includes the latter -O-A< group where R' is hydrogen such that the polyetherimide is of the formula:

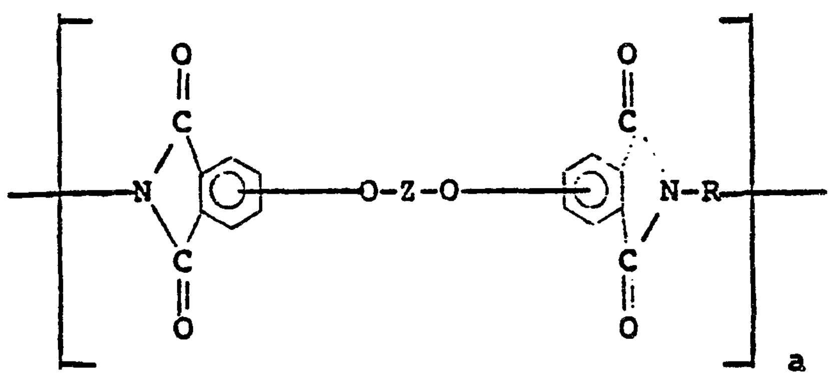

and the divalent bonds of the -O-Z-O- radical are in the 3,3'; 3,4'; 4,3' or the 4,4' position;
Z is a member of the class consisting of (1)

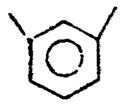 , 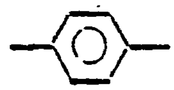 , 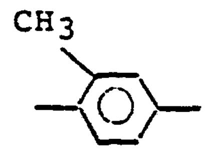 ,

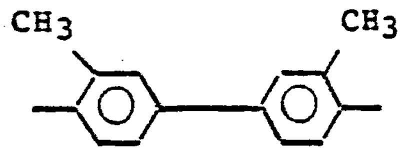 , 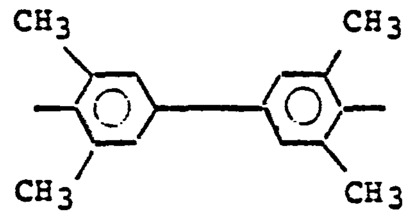

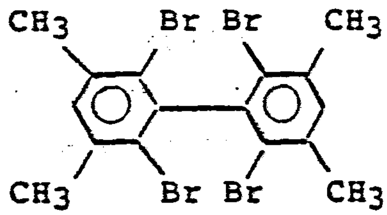 and 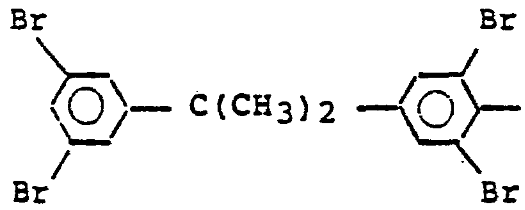

and (2) divalent organic radicals of the general formula:

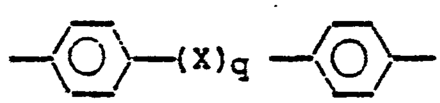

where X is a member selected from the class consisting of divalent radicals of the formulas,

$-C_yH_{2y}-$, 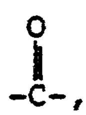, 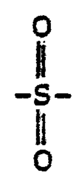, -O- and -S-

where q is 0 or 1, y is a whole number from 1 to 5, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from 2 to about 20 carbon atoms, $C_{(2-8)}$ alkylene terminated polydiorganosiloxane, and (3) divalent radicals included by the formula:

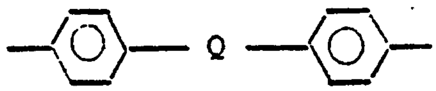

where Q is a member selected from the class consisting of:

-O-, 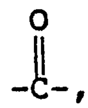 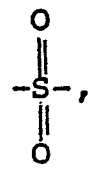 -S-, and $C_xH_{2x}$-,

where X is a whole number from 1 to 5 inclusive. Particularly preferred polyetherimides for the purposes of the present invention include those where -O-A< and Z respectively are:

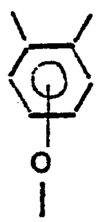

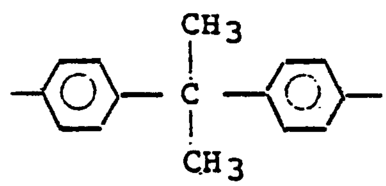

and R is selected from:

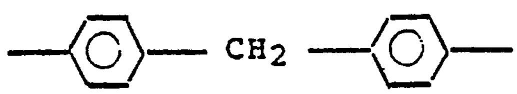

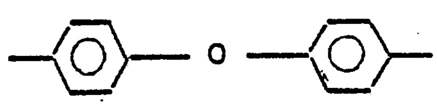

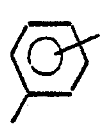

The polyetherimides where R is metaphenylene are most preferred.

The polyetherimides can be obtained by any of the methods well known to those skilled in the art, including the reaction of an aromatic bis(ether anhydride) of the formula:

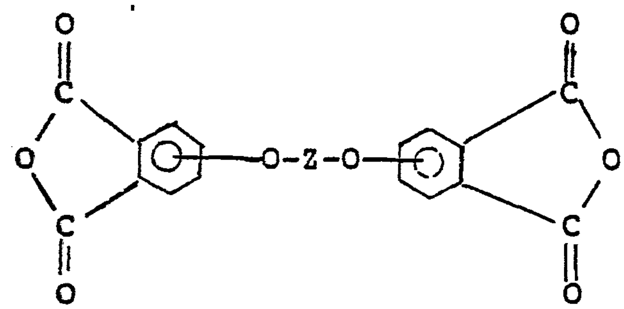

where Z is as defined hereinbefore with an organic diamine of the formula:

$$H_2N-R-NH_2$$

where R is as defined hereinbefore.

Aromatic bis(ether anhydride)s of the above formula include, for example, 2,2-bis[4-(2,3-dicarboxyphenoxy)-phenyl]-propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxyphenoxy)benzene dianhydride; 4,4'-bis(2,3-dicarboxyphenoxy)benzophenone dianhydride; 4,4'-bis(2,3-dicarboxyphenoxy)diphenyl sulfone dianhydride; 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl

1-2,2-propane dianhydride; etc. and mixtures of such dianhydrides.

In addition, aromatic bis(ether anhydride)s also included by the above formula are shown by Koton, M.M.; Florinski, F.S.; Bessonov, M.I.; Rudakov, A.P. (Institute of Heteroorganic compounds, Academy of Science, U.S.S.R.), U.S.S.R. 257,010, Nov. 11, 1969, Appl. May 3, 1967. In addition, dianhydrides are shown by M.M. Koton, F.S. Florinski, Zh. Org. Khin., 4(5), 774 (1968).

Organic diamines of the above formula include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine, 3,3'-dimethoxybenzidine, 2,4-bis(β-amino-t-butyl)toluene, bis(p-β-amino-t-butylphenyl)ether, bis(p-β-methyl-o-aminopentyl)benzene, 1,3-diamino-4-isopropylbenzene, 1,2-bis(3-aminopropoxy)-ethane, m-xylylenediamine, p-xylylenediamine, 2,4-diaminotoluene, 2,6-diaminotoluene, bis(4-aminocyclohexyl)-methane, 3-methylheptamethylenediamine, 4,4-dimethylheptamethylenediamine, 2,11-dodecanediamine, 2,2-dimethylpropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl)sulfide, N-methyl-bis(3-aminopropyl)amine, hexamethylenediamine, heptamethylenediamine, nonamethylenediamine, decamthylenediamine, bis(3-aminopropyl)tetramethyldisiloxane, bis(4-aminobutyl)tetramethyldisiloxane, and the like.

In general, the reactions can be advantageously carried out employing well-known solvents, e.g., o-dichlorobenzene, m-cresol/toluene, etc. in which to effect interaction between the dianhydrides and the

diamines, at temperatures of from about 100 to about 250°C. Alternatively, the polyetherimides can be prepared by melt polymerization of any of the above dianhydrides with any of the above diamine compounds while heating the mixture of the ingredients at elevated temperatures with concurrent intermixing. Generally, melt polymerization temperatures between about 200 to 400°C. and preferably 230° to 300°C. can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscosity [$\eta$] greater than 0.2 deciliters per gram, preferably 0.35 to 0.60, or 0.7 deciliters per gram or even higher when measured in m-cresol at 25°C.

Included among the many methods of making the polyetherimides are those disclosed in U.S. Patent Nos. Heath et al. 3,847,867, Williams 3,847,869, Takehoshi et al. 3,850,885, White 3,852,242 and 3,855,178, etc. These disclosures are incorporated herein in their entirety by reference for the purpose of teaching, by way of illustration, general and specific methods for preparing polyetherimides suitable for the blends of this invention.

The particular polyetherimide-polyestercarbonate blends of the present invention have application in a wide variety of physical shapes and forms, including the use as films, molding compounds, coatings, etc. When used as films or when made into molded products, these

blends, including laminated products prepared therefrom, not only possess good physical properties at room temperature but they retain their strength and excellent response to workloading at elevated temperatures for long periods of time. Films formed from the blends of this invention may be used in application where films have been used previously. Thus, the blends of the present invention can be used in automobile and aviation applications, for decorative and protective purposes, and as high temperature electrical capacitors, cable and coil wrappings (form wound coil insulation for motors), and for containers and container linings. The blends can also be used in laminated structures where films or solutions of the blend are applied to various heat-resistant or other type of materials such as asbestos, mica, glass fiber and the like, the sheets superimposed one upon the other, and thereafter subjecting the sheets to elevated temperatures and pressures to effect flow and cure of the resinous binder to yield cohesive laminated structures. Films made from the subject polyetherimide-polyestercarbonate blends can also serve in printed circuit applications.

Alternatively, solutions of the blends herein described can be coated on electrical conductors such as copper, aluminum, and the like and thereafter the coated conductor can be heated at elevated temperatures to remove the solvent and to form a continuous coating of the resinous composition thereon. If desired, an additional overcoat may be applied to such insulated conductors including the use of polymeric coatings, such as polyamides, polyesters, silicones, polyvinylformal resins, epoxy resins, polyimides, polytetrafluorethylene, etc. The use of the blends of the present invention as overcoats on other types of insulation is not precluded.

Other applications which are contemplated for these blends include their use as binders for asbestos fibers, carbon fibers, and other fibrous materials in making brake linings. In addition, molding compositions and molded articles may be formed from the polymeric blends of the invention such as by incorporating such fillers as asbestos, glass fibers, talc, quartz, powder, finely divided carbon, silica, and the like into the blends prior to molding. Shaped articles may be formed under heat, or under heat and pressure, in accordance with practices well-known in the art.

Homogeneous blends in accordance with this invention can vary widely in composition. Such blends contain from about 1 to about 99 parts by weight polyestercarbonate and from about 99 to about 1 parts by weight polyetherimide. Preferred blends contain from about 1 to about 6 parts by weight polyestercarbonate and from about 6 to about 1 parts by weight polyetherimide. It has been found that by controlling the relative proportions of these components, the flexibility of the resulting blends can be tailored to the specifications dictated by the end use. Blends having higher concentrations of polyetherimides are stiffer and those having higher concentrations of polyestercarbonates are more flexible. Generally, the blends of the invention exhibit improved impact strength over prior art polyetherimides.

The following example illustrates specific polyetherimide polyestercarbonate blends in accordance with the present invention. It should be understood that the example is given for the purpose of illustration and does not limit the invention. In the example, all parts and percentages are by weight unless otherwise specified.

<u>Example</u>

Several blends were prepared which contain a commercially available polyetherimide sold under the trademark

ULTEM® by General Electric Company, Pittsfield, Massachusetts, USA, and a polyestercarbonate prepared from bisphenol A, isophthaloyl chloride, terephthaloyl chloride and phosgene. The weight ratio of bisphenol A:isophthalyl chloride:terephthaloyl chloride in the polyestercarbonte was 35:10:55. The polyetherimide used had the following structural formula:

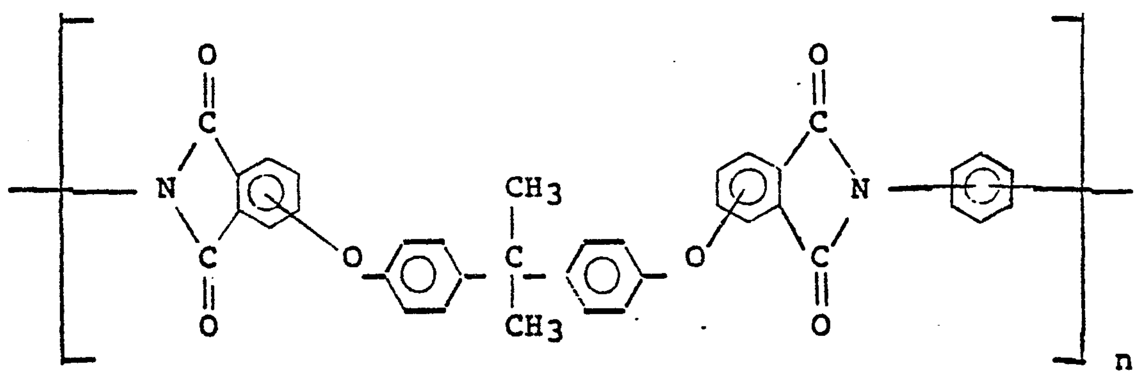

Ten percent solutions of the polyestercarbonte and polyetherimide were prepared in chloroform. These solutions were mixed to form 1:1, 1:3, 3:1, 1:6 and 6:1 weight ratios of polyestercarbonate to polyetherimide. Thin films of the blended polymers were deposited on Mylar® sheets by spreading a small aliquot of the solution and evaporating the solvent. These films were then peeled from the Mylar sheets and observed for clarity and homogeneity. Each of the blends exhibited good homogeneity. The 1:6 polyestercarbonate:polyetherimide blends were stiff and the 6:1 polyestercarbonate:polyetherimide blends were flexible.

CLAIMS

1. A composition, comprising:

A blend of (a) a polyetherimide and (b) a polyestercarbonate where the ratio of polyetherimide to polyester-carbonate is from about 1:99 to about 99:1 by weight.

2. A composition in accordance with claim 1, wherein the polyetherimide has the formula:

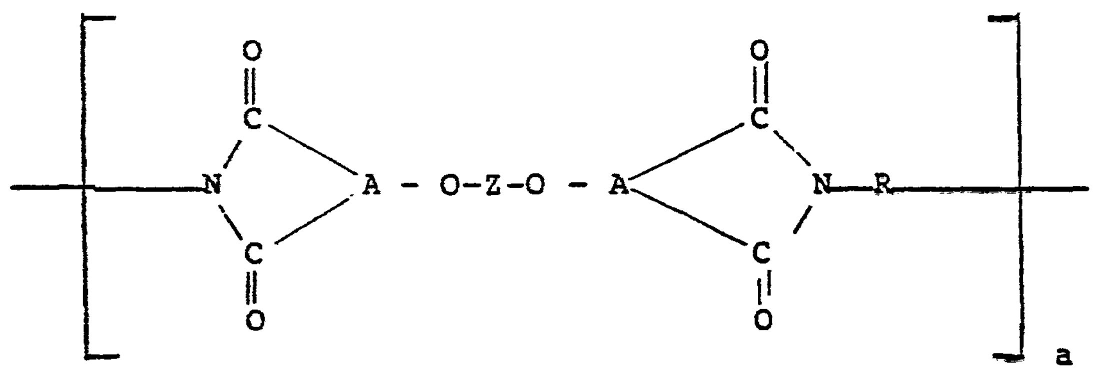

where "a" represents a whole number in excess of 1, e.g., 10 to 10,000 or more, the group -O-A< is selected from:

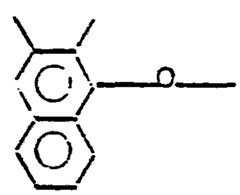

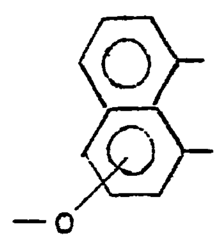

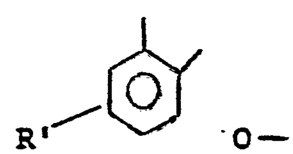

R' being hydrogen, lower alkyl or lower alkoxy; Z is a member of the class consisting of (1)

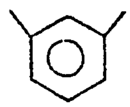,
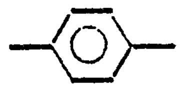,
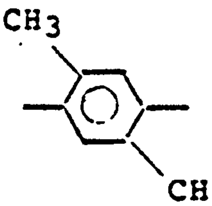,

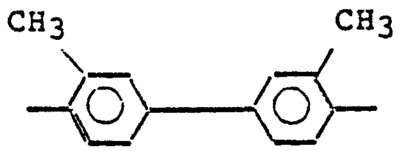,
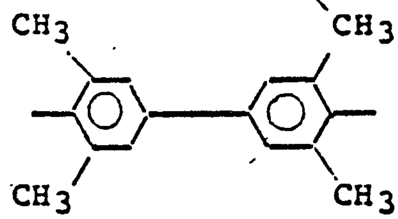

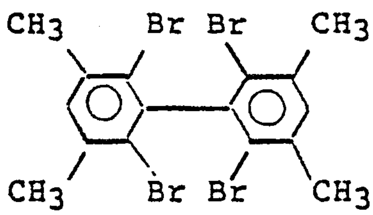 and 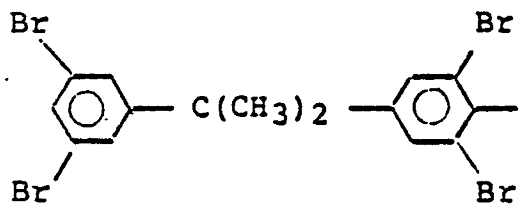

and (2) divalent organic radicals of the general formula:

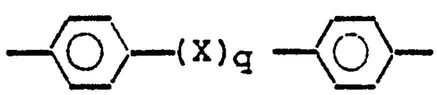

where X is a member selected from the class consisting of divalent radicals of the formulas;

$-C_yH_{2y}-$, 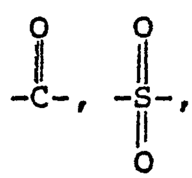, -O- and -S-

where q is 0 or 1, y is a whole number from 1 to 5, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from 2 to about 20 carbon atoms, $C_{(2-8)}$ alkylene terminated polydiorganosiloxane, and (3) divalent radicals included by the formula:

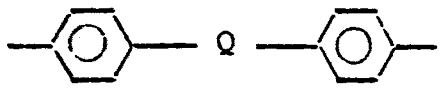

where Q is a member selected from the class consisting of:

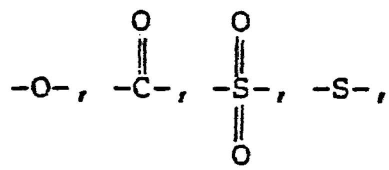 and $C_xH_{2x}-$,

where X is a whole number from 1 to 5 inclusive.

3. A composition in accordance with claim 2 wherein the polyetherimide is of the formula:

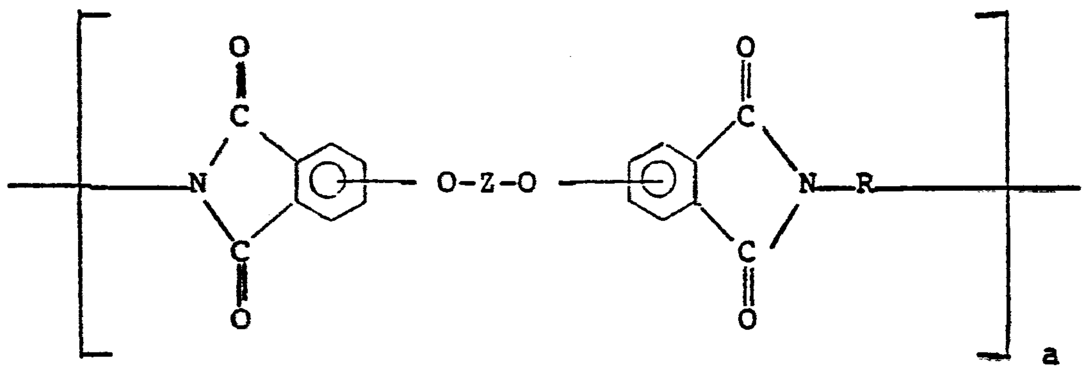

4. A composition in accordance with claim 3, wherein Z is:

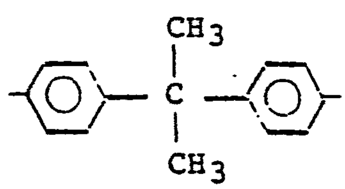

and R is selected from:

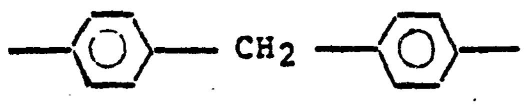

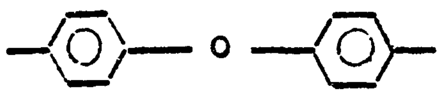

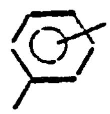

5. A composition in accordance with claim 4, wherein the polyetherimide is of the formula:

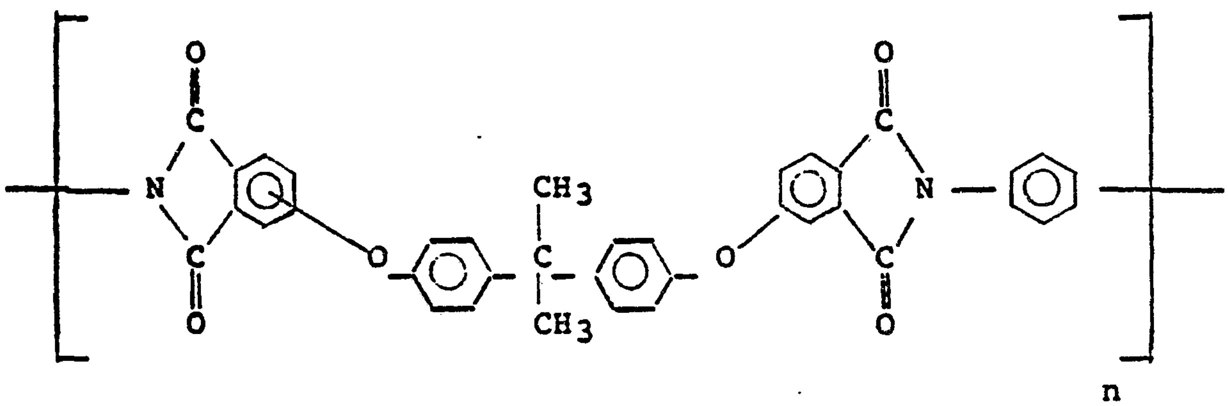

6. A composition in accordance with claim 5, wherein the polyestercarbonate is the residue derived from:

the reaction of aliphatic dihydroxy compounds and/or dihydric phenols, difunctional acids, and a carbonate precursor, the aliphatic dihydroxy compounds selected from the group consisting of:

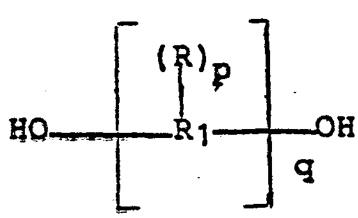

where R may be the same or different and is selected from the group consisting of alkyl radicals, aralkyl radicals, cycloaliphatic radicals, and any of the above having inert substituents thereon; $R_1$ is selected from the group consisting of alkylene and alkylidene residues; a silane radical; a polyalkyoxy; two or more alkylene or alkylidene groups, as above, separated by a radical selected from the group consisting of the residue of an aromatic nucleus, a teriary amino radical, an ether radical, a carbonyl radical, a silane radical, and a sulfur containing radical; a glycol dibasic acid ester residue derived from dibasic acids selected from the group consisting of adipic, azelaic, sebacic, isophthalic and terephthalic, and glycols; subscript p is a whole number including zero to a maximum determined by the number of replaceable hydrogens on $R_1$; subscript q is an integer which may be varied as desired and $R_1$, where q is more than 1, may be like or different radicals;

the dihydric phenols selected from the group consisting of:

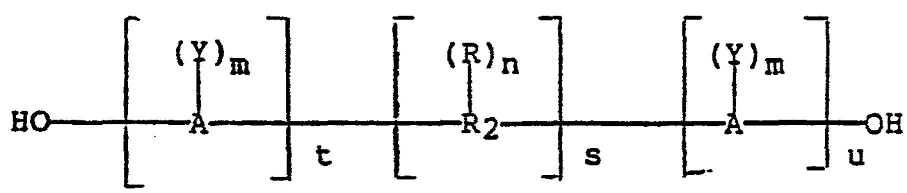

where R is defined above, $R_2$ is selected from the group consisting of alkylene residues; alkylidene residues; ethers; sulfur-containing linkages; carbonyls; tertiary nitrogens; silicon-containing linkages and two or more alkylene or alkylidene groups separated by radicals selected from the group consisting of the residue of an aromatic nucleus, tertiary amino radicals, ether radicals, carbonyl radicals, silene radicals and sulfur-containing radicals; A is the residue of an aromatic nucleus; Y is a substituent selected from the group

consisting of inorganic atoms, inorganic radicals, and organic radicals; m is a whole number including zero to a maximum equivalent to the number of replaceable nuclear hydrogens substituted on the aromatic hydrocarbon residue; n is a whole number including zero to a maximum determined by the number of replaceable hydrogens on $R_2$; s ranges from zero to 1; t and u are whole numbers including zero; and

the difunctional acids selected from the group consisting of:

$$R''-[-R'-]_q-COOH$$

in which R' is selected from the group of an alkylene, alkylidene, cycloaliphatic; an alkylene, alkylidene or cycloaliphatic group containing ethylenic unsaturation; an aromatic radical selected from the group consisting of phenylene, naphthylene, biphenylene, and substituted phenylene; two or more aromatic groups connected through non-aromatic linkages; and aralkyl radicals; R" is selected from the group consisting of a carboxyl or hydroxyl group, and q is 1 where R" is a hydroxyl group; and either zero or 1 where R" is a carboxyl group.

7. A composition in accordance with claim 6 consisting of the residue of an aromatic difunctional acid and dihydric phenol.

8. A composition in accordance with claim 7 wherein the dihydric phenol is bisphenol A, the difunctional acid is a mixture of isophthalic and terephthalic and the carbonate precursor is phosgene.

9. A composition in accordance with claim 8 wherein the ratio of polyetherimide to polyester carbonate is from about 1:6 to about 6:1.

10. A composition in accordance with claim 7 wherein the dihydric phenol is bisphenol A, the difunctional acid is isophthalic and the carbonate precursor is phosgene.

European Patent Office

# EUROPEAN SEARCH REPORT

0158733
Application number

EP 84 11 5916

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| P,A | EP-A-0 117 327 (GENERAL ELECTRIC)<br>--- | | C 08 L 79/08<br>C 08 L 69/00 |
| A | US-A-4 250 279 (L.M. ROBESON)<br>* Example 6 *<br>--- | | |
| A | US-A-4 225 687 (P. DeTORRES)<br>----- | | |
| | | | **TECHNICAL FIELDS SEARCHED (Int. Cl.4)** |
| | | | C 08 L |

The present search report has been drawn up for all claims

| Place of search | Date of completion of the search | Examiner |
|---|---|---|
| THE HAGUE | 03-07-1985 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82